# EUROPÄISCHE PATENTSCHRIFT

(11) **EP 3 595 893 B1**
(45) Veröffentlichungstag und Bekanntmachung des Hinweises auf die Patenterteilung: **17.01.2024**
(21) Anmeldenummer: 18705154.5
(22) Anmeldetag: 20.02.2018
(51) Int. Cl.: B32B 17/10

(54) **VERBUNDSCHEIBE MIT EINEM ELEKTRISCHEN VERBRAUCHER**
COMPOSITE PANE COMPRISING AN ELECTRIC CONSUMER
VITRE COMPOSITE COMPRENANT UN CONSOMMATEUR ÉLECTRIQUE

(30) Priorität: 15.03.2017 EP 17161056
(43) Veröffentlichungstag der Anmeldung: 22.01.2020
(73) Patentinhaber: SAINT-GOBAIN GLASS FRANCE, 92400 Courbevoie (FR)
(72) Erfinder: KLEIN, Marcel, 52499 Baesweiler (DE)
(74) Vertreter: Hermanns, Ellen
(86) Internationale Anmeldenummer: PCT/EP2018/054055
(87) Internationale Veröffentlichungsnummer: WO 2018/166759

(56) Entgegenhaltungen:
- WO-A1-2012/031647
- DE-A1-102007 012 571
- DE-A1-102008 036 579
- US-A1- 2006 174 476

## Beschreibung

Die Erfindung betrifft eine Verbundscheibe, ein System zur Wiedergabe von Bildinformationen mit einer solchen Verbundscheibe, ein Verfahren zur Herstellung der Verbundscheibe und eine Verwendung der Verbundscheibe in einem Kraftfahrzeug.

Moderne Kraftfahrzeuge werden in zunehmendem Maße mit zusätzlichen Funktionalitäten ausgestattet. Auch zur Erhöhung der Sicherheit im Verkehr werden Kraftfahrzeuge mit Fahrerassistenzsystemen angeboten, die einem Fahrzeugführer wichtige Information zu seiner aktuellen Verkehrssituation geben. Dazu gehört auch ein kamera- und displaybasiertes Spiegelersatzsystem, das einen größeren Bildausschnitt als ein herkömmlicher Rückspiegel darstellen kann. Es ist bekannt zur Überwachung eines hinter dem Fahrzeug liegenden Verkehrsraums eine Kamera zur Aufnahme von Bildern zu verwenden. Die Bilder werden an einem im Bereich des Cockpits platzierten Display wiedergeben. Bedingt durch den begrenzt zur Verfügung stehenden Bauraum ist auch das Display entsprechend klein dimensioniert.

Des Weiteren bestehen Windschutzscheiben von Fahrzeugen, die dabei zum Einsatz kommen, aus zwei Glasscheiben, welche über eine thermoplastische Folie miteinander laminiert sind. Zwischen den zwei Glasscheiben befinden sich nicht vollflächig integrierte Elemente, wie z.B. LEDs oder Displays. Das Verbinden der zwei Glasscheibe sowie der Elemente erfolgt in einem einzigen Laminationsprezess. Derartige integrierte Elemente können im mittleren, oberen Abschnitt der Windschutzscheibe angeordnet sein. Eine derartig ausgestattet Windschutzscheibe kann das Problem aufweisen, dass die Elemente, insbesondere LED basierte Displays, den hohen Temperaturen und Druckanforderung bei der Lamination nicht Stand halten. Auch eine Reduzierung der Temperatur, der Verweildauer oder des Drucks führt nicht zum gewünschten Erfolg, denn die Optik der Verbundscheibe ist in solchen Fällen nicht akzeptabel. Insbesondere wenn das Display zur Wiedergabe von Bildinformationen vorgesehen ist, kann sich die Optik des Display nach der Lamination erheblich verschlechtern. Diese Produktionsfehler resultieren in hohen Ausschusszahlen, da Displays mit einer schlechten Optik nicht verwendet werden können.

In DE 10 2007 012 571 A1 und US 2006/0174476 A1 sind Verbundscheiben mit einem darin angeordneten elektrischen Verbraucher offenbart.

Der Erfindung liegt die Aufgabe zugrunde, eine Verbundscheibe mit einem elektrischen Verbraucher bereitzustellen, welcher in die Verbundscheibe integriert werden kann und bei dem die Optik des Verbrauchers deutlich verbessert ist.

Die Aufgabe der vorliegenden Erfindung wird erfindungsgemäß durch eine Verbundscheibe gemäß Anspruch 1 gelöst. Bevorzugte Ausführungen gehen aus den Unteransprüchen hervor.

Die erfindungsgemäße Verbundscheibe mit einem elektrischen Verbraucher umfasst eine Außenscheibe und eine Innenscheibe, die über eine thermoplastische Zwischenschicht miteinander verbunden sind, wobei
- die thermoplastische Zwischenschicht eine Ausnehmung aufweist, die eine Aufnahmeöffnung aufweist,
- die Aufnahmeöffnung derart dimensioniert ist, dass diese zur Aufnahme des elektrischen Verbrauchers in die Ausnehmung vorgesehen ist und
- der elektrische Verbraucher in der Ausnehmung angeordnet ist.

Erfindungsgemäß ist zwischen dem elektrischen Verbraucher und der Zwischenschicht keine Verbindung vorgesehen.

Dadurch dass der elektrische Verbraucher von außen in die Verbundscheibe einsetzbar ist und nicht während der Lamination der Verbundscheibe hohen Temperatur- und Druckeinflüssen ausgesetzt ist, wird eine gute Optik des elektrischen Verbrauchers in der Verbundscheibe beibehalten. Dabei bleibt der elektrische Verbraucher optisch klar und deutlich wahrnehmbar. Der elektrische Verbraucher kann dabei direkt zwischen der Außenscheibe und der Innenscheibe angeordnet sein und somit Licht besonders klar und deutlich für einen Fahrzeugführer emittieren.

Die Außenscheibe und die Innenscheibe weisen bevorzugt eine konstante Dicke auf mit im Wesentlichen planparallelen Hauptflächen und einer umlaufenden, diese verbindenden Seitenkante. In einer bevorzugten Ausgestaltung kann eine derartige Verbundscheibe an einer Seitenkante die Aufnahmeöffnung aufweisen, so dass der elektrische Verbraucher von außen in die Verbundscheibe in einfacher Weise einsetzbar ist. Mit Innenscheibe wird im Sinne der Erfindung die dem Innenraum (Fahrzeuginnenraum) zugewandte Scheibe der Verbundscheibe bezeichnet. Mit Außenscheibe wird die der äußeren Umgebung zugewandte Scheibe bezeichnet.

Zweckmäßigerweise kann der elektrische Verbraucher eine Anzeigevorrichtung, insbesondere ein Display, zur Anzeige einer optischen Information sein. Solch eine Anzeigevorrichtung kann eine organische Leuchtdiode (OLED), eine anorganische Leuchtdiode (LED), TFT-Display und /oder ein LCD Bildschirm sein. Alternativ ist aber auch die Verwendung mehrerer solcher Displays.

In einer Ausführungsform ist die Ausnehmung derart dimensioniert, dass diese den elektrischen Verbraucher bündig aufnehmen kann.

In einer Ausführungsform ist ein Display als elektrischer Verbraucher derart in der Ausnehmung angeordnet, dass zwischen dem elektrischen Verbraucher und der Zwischenschicht keine Verbindung vorgesehen ist. Die Ausnehmung kann hierbei einen Rahmen als eine Haltervorrichtung aufweisen, in dem der elektrische Verbraucher gelagert ist. Zusätzlich kann der Rahmen eine Rasteinrichtung zur Arretierung des elektrischen Verbrauchers aufweisen. Die Rasteinrichtung kann an der Aufnahmeöffnung angeordnet sein.

Vorzugsweise kann die Aufnahmeöffnung schlitzförmig ausgebildet sein. Die schlitzförmige Aufnahmeöffnung ist derart dimensioniert, das ein Display über die Aufnahmeöffnung in die Ausnehmung eingeführt werden kann.

Der elektrische Verbraucher kann bei diesen Ausführungsformen über ein Anschlusselement Daten, insbesondere Bilddaten empfangen und/oder mit einer Stromversorgung verbunden sein. Das Anschlusselement erstreckt sich aus der Aufnahmeöffnung nach außen. Dabei kann das Anschlusselement als ein flexibler Folienleiter (Flachleiter, Flachbandleiter) ausgebildet sein. Ein Folienleiter ist beispielsweise ein Streifen oder Band enthaltend oder bestehend aus Kupfer, verzinntem Kupfer, Aluminium, Silber, Gold oder Legierungen davon. Der Folienleiter weist beispielsweise eine Breite von 2 mm bis 16 mm und eine Dicke von 0,03 mm bis 0,1 mm auf. Der Folienleiter kann eine isolierende, bevorzugt polymere Ummantelung, beispielsweise auf Polyimid-Basis aufweisen. Alternativ können auch dünne Metalldrähte als elektrische Verbindung verwendet werden.

In einer weiteren Ausführungsform ist der elektrische Verbraucher über ein Datenbussystem mit einem Netzwerk verbunden. Das Datenbussystem kann ein CAN-, LIN-, MOST-System sein. Das Netzwerk kann weiter eine Kamera zur Erfassung von Bildinformationen einer Umgebung der Kamera umfassen. Die Kamera kann dazu an einem Fahrzeug angebracht sein und ein Bestandteil eines Fahrerassistenzsystems sein. Dies erspart eine zusätzliche Ausstattung des Fahrzeugs mit energie- und platzkonsumierenden Komponenten. Die Kamera kann im hinteren Bereich des Fahrzeugs angeordnet sein.

Der elektrische Verbraucher weist in einer vorteilhaften Ausgestaltung eine drahtlose Schnittstelle zur Übertragung von Daten auf, die nach einem Bluetooth-, NFC-, Zigbee-, WLAN (IEEE 802.11, Wi-Fi) oder DECT-Standard Daten arbeitet.

In einer weiteren bevorzugten Ausführungsform sind die Ausnehmung und der elektrische Verbraucher im mittleren oberen Abschnitt der Verbundscheibe angeordnet. Alternativ oder zusätzlich kann der elektrische Verbraucher an einem unteren Rand der Verbundscheibe angeordnet sein.

Die thermoplastische Zwischenschicht ist bevorzugt transparent. Die Zwischenschicht enthält vorzugsweise mindestens einen Kunststoff, bevorzugt Polyvinylbutyral (PVB), Ethylenvinylacetat (EVA) und/oder Polyethylenterephthalat (PET). Die Zwischenschicht kann aber auch beispielsweise Polyurethan (PU), Polypropylen (PP), Polyacrylat, Polyethylen (PE), Polycarbonat (PC), Polymethylmetacrylat, Polyvinylchlorid, Polyacetatharz, Gießharze, Acrylate, fluorinierte Ethylen-Propylene, Polyvinylfluorid und/oder Ethylen-Tetrafluorethylen, oder Copolymere oder Gemische davon enthalten. Die Zwischenschicht kann durch eine oder auch durch mehrere übereinander angeordnete Folien ausgebildet werden, wobei die Dicke einer Folie bevorzugt von 0,025 mm bis 1 mm beträgt, typischerweise 0,38 mm oder 0,84 mm. Die Zwischenschicht kann bevorzugt thermoplastisch sein und nach einer Lamination die Innenscheibe, die Außenscheibe und eventuelle weitere Zwischenschichten miteinander verkleben. Im Sinne der Erfindung ist die Lamination also das Verbinden von Innenscheibe, Zwischenschicht und Außenscheibe.

Die Verbundscheibe bzw. die Innenscheibe und die Außenscheibe enthalten bevorzugt Glas, besonders bevorzugt Flachglas, Floatglas, Quarzglas, Borosilikatglas, Kalk-Natron-Glas, oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon. Die Verbundscheibe bzw. die Innenscheibe und die Außenscheibe sind bevorzugt transparent, insbesondere für die Verwendung der Scheibe als Windschutzscheide eines Fahrzeugs oder anderen Verwendungen bei denen eine hohe Lichttransmission erwünscht ist. Als transparent im Sinne der Erfindung wird dann eine Scheibe verstanden, die eine Transmission im sichtbaren Spektralbereich von größer 70 % aufweist. Für Scheiben, die nicht im verkehrsrelevanten Sichtfeld des Fahrers liegen, beispielsweise für Dachscheiben, kann die Transmission aber auch viel geringer sein, beispielsweise größer als 5 %.

Die Dicke der Innenscheibe beträgt in einer vorteilhaften Ausgestaltung von 0,4 mm bis 3,5 mm, bevorzugt von 0,9 mm bis 2,1 mm.

Die Dicke der Außenscheibe beträgt in einer vorteilhaften Ausgestaltung mindestens 1,4 mm, bevorzugt mindestens 1,6 mm. Die Dicke der Außenscheibe beträgt bevorzugt höchstens 4,5 mm, bevorzugt höchstens 2,1 mm. In diesem Bereich weist die Verbundscheibe eine vorteilhafte mechanische Stabilität und geräuschabschirmende Eigenschaften auf, ist aber trotzdem noch hinreichend dünn und leicht, um als Windschutzscheibe eingesetzt werden zu können.

Die Außenscheibe, die Innenscheibe und die thermoplastische Zwischenschicht können klar und farblos, aber auch getönt oder gefärbt sein. Die Gesamttransmission durch die Verbundscheibe beträgt in einer bevorzugten Ausgestaltung größer 70%, insbesondere wenn die Verbundscheibe eine Windschutzscheibe ist. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben. Die Außenscheibe kann vorzugsweise im Bereich nahe der Glaskante auf der Innenseite einen Schwarzdruck aufweisen, um die Ausnehmung mit dem elektrischen Verbraucher zu kaschieren.

Die Verbundscheibe ist bevorzugt in einer oder in mehreren Richtungen des Raumes gebogen, wie es für Kraftfahrzeugscheiben üblich ist, wobei typische Krümmungsradien im Bereich von etwa 10 cm bis etwa 40 m liegen. Die Verbundscheibe kann aber auch plan sein, beispielsweise wenn es als Scheibe für Busse, Züge oder Traktoren vorgesehen ist.

Die Herstellung der Verbundscheibe durch Lamination erfolgt mit beispielsweise Vakuumsackverfahren, Vakuumringverfahren, Kalanderverfahren, Vakuumlaminatoren, Autoklavverfahren oder Kombinationen davon. Die Verbindung von Außenscheibe und Innenscheibe erfolgt üblicherweise unter Einwirkung von Hitze, Vakuum und / oder Druck.

Die Verbundscheibe ist zur Abtrennung eines Fahrzeugsinnenraums von einer äußeren Umgebung geeignet. Die Verbundscheibe kann vielfältig eingesetzt werden. Sie kann beispielsweise eine Windschutzscheibe, eine Dachscheibe, eine Heckscheibe, eine Seitenscheibe oder eine andere den Fahrzeuginnenraum begrenzende Verglasung sein.

In einer bevorzugten Ausgestaltung sind die Außenscheibe und Innenscheibe nicht mit einer Vorspannung versehen. Es bildet sich während des Laminierens der Scheiben dennoch eine charakteristische Verteilung von Zug- und Druckspannungen aus, die der Fachmann aber problemlos von Spannungen, die bewusst durch die Verwendung vorgespannter Scheiben erzeugt werden, unterscheiden kann.

Ein weiterer Aspekt der Erfindung umfasst ein System zur Wiedergabe von Bildinformationen, dadurch gekennzeichnet, dass eine Kamera zur Aufnahme von Bildern der Umgebung des Fahrzeugs vorgesehen ist und eine Verbundscheibe mit einem Display zur Anzeige der aufgenommen Bilder vorgesehen ist. Das System nimmt zunächst über die Kamera ein Bild auf und gibt dann das Bild über das in der Verbundscheibe angeordnete Display wieder.

Zur besseren Erkennbarkeit ist es zweckmäßig, wenn die Kamera eine CCD-Kamera ist. Alternativ oder zusätzlich kann die Kamera ein Radar oder eine Infrarotkamera sein.

Das erfindungsgemäße System zur Wiedergabe von Bildinformationen bietet anstelle eines konventionellen Rückspiegels eine klare und deutliche Wiedergabe der von der Kamera erfassten Bilder, so dass ein konventioneller platzraubender Rückspiegel an der Windschutzscheibe entfallen kann.

In diesem Zusammenhang ist es besonders zweckmäßig, wenn an der Stelle, an der üblicherweise der Rückspiegel des Fahrzeugs angeordnet ist das Display vorzusehen. Optional kann das Display eine hintere Schwärzung besitzen.

Die Erfindung umfasst außerdem ein Verfahren zur Herstellung einer Verbundscheibe mit einem elektrischen Verbraucher, wobei
a) eine thermoplastische Zwischenschicht bereitgestellt wird,
b) eine Ausnehmung im Randbereich der thermoplastischen Zwischenschicht ausgeschnitten wird, wobei die Form der Ausnehmung zumindest der Grundform des elektrischen Verbrauchers angepasst ist,
c) die thermoplastische Zwischenschicht flächig auf Innenscheibe oder Außenscheibe aufliegt,
d) ein Platzhalter in die Ausnehmung eingesetzt wird,
e) auf die thermoplastische Zwischenschicht die Außenscheibe oder Innenscheibe aufgelegt wird,
f) ein Schichtstapel umfassend
   - Innenscheibe,
   - thermoplastische Zwischenschicht mit dem Platzhalter und
   - Außenscheibe
   zu einer Verbundscheibe laminiert wird und
g) der elektrische Verbraucher in die Ausnehmung eingesetzt wird.

Die Herstellung des Verbundglases durch Lamination erfolgt mit üblichen, dem Fachmann an sich bekannten Methoden, beispielsweise Autoklavverfahren, Vakuumsackverfahren, Vakuumringverfahren, Kalanderverfahren, Vakuumlaminatoren oder Kombinationen davon. Die Verbindung von Außenscheibe und Innenscheibe erfolgt üblicherweise unter Einwirkung von Hitze, Vakuum und / oder Druck. Das sogenannte Autoklavverfahren wird bei einem erhöhten Druck von etwa 10 bar bis 15 bar und Temperaturen von 130 °C bis 145 °C über etwa 2 Stunden durchgeführt.

Durch die Verwendung eines Platzhalters bei der Lamination kann in einfacher Weise eine Ausnehmung während der Lamination in der Verbundscheibe erzeugt werden, die zur Aufnahme eines elektrischen Verbrauchers vorgesehen ist. Da der elektrische Verbraucher der Lamination nicht ausgesetzt ist, wird dieser durch die hohen Temperaturen und Druck bei der Lamination nicht beeinträchtigt. Zusätzlich kann ein Rückschnitt der Zwischenschicht einfach und schnell nach der Lamination und vor dem Einsetzen des elektrischen Verbrauchers erfolgen, ohne dass heraushängende Anschlusselemente berücksichtigt werden müssen. Der Zuschnitt in Schritt b) und der Rückschnitt der Zwischenschicht nach der Lamination erfolgt vorzugsweise senkrecht zur Oberfläche der Zwischenschicht.

Insbesondere kann der Platzhalter als eine Platte ausgebildet sein, die flach und überall gleich dick ist. Die Platte zeichnet sich durch ihre auf zwei gegenüberliegenden Seiten ausgedehnte ebene Fläche aus, wobei die Platte aus einem festen Material (z.B. Papier, Holz, Metall, Stein) bestehen kann. Nachdem der Platzhalter in Schritt e) in die Ausnehmung eingesetzt wurde, kann er seitlich über die Kante der Innen- oder Außenscheibe hinausragen. Dies ermöglicht die Bildung einer Grifffläche, an der der Platzhalter nach der Lamination in Schritt f) aus der Verbundscheibe entfernt werden kann. Vorteilhafterweise weist der Platzhalter in dieser Ausführungsform zumindest teilweise eine Antihaftbeschichtung, insbesondere aus Polytetrafluorethylen, auf. Das Polytetrafluorethylen Kurzbezeichnung PTFE, auch Polytetrafluorethen ist ein unverzweigtes, linear aufgebautes, teilkristallines Polymer aus Fluor und Kohlenstoff und auch als sogenanntes "Teflon", Polytetrafluorethen oder Xynflon bekannt. Dadurch ermöglicht das Polytetrafluorethylen ein einfaches Ablösen des Platzhalters von der Zwischenschicht der Verbundscheibe.

Nach dem Einsetzen des elektrischen Verbrauchers in die Ausnehmung kann diese dann mit einem Dichtmittel gasdicht verschlossen werden, wobei ein Anschlusselement des elektrischen Verbrauchers nach außen geführt ist. Als Dichtmittel kann dabei Bytol verwendet werden. Es ist auch möglich zum Schutz des elektrischen Verbrauchers vor äußeren Einflüssen, wie z.B. Feuchtigkeit und Verschmutzung, eine nachträgliche und zeitlich beschränkte Lamination bei geringen Temperaturen durchzuführen, um die Ausnahmung zu verschliessen.

Optional kann der Platzhalter als eine Haltevorrichtung ausgebildet sein, die zwischen der Innenscheibe und der Außenscheibe die Ausnehmung umrahmt. Dabei wird der elektrische Verbraucher nach der Lamination in Schritt f) in die Haltevorrichtung eingesetzt. In einer derartigen Ausführungsform kann die Haltevorrichtung als ein Rahmen ausgebildet sein, der auf der Innenscheibe oder Außenscheibe in Schritt d) des erfindungsgemäßen Verfahrens angeordnet wird. Dadurch begrenzt der Rahmen die Ausnehmung gegenüber der Zwischenschicht. Zusätzlich kann die Haltevorrichtung über mechanisch wirkende Mittel zur Fixierung des elektrischen Verbrauchers verfügen, wobei die Mittel zur Fixierung eine zerstörungsfreie Entnahme des elektrischen Verbrauchers erlauben. Weiterhin kann die Haltevorrichtung eine Aufnahmeöffnung aufweist, die von der Haltevorrichtung allseitig umschlossen wird. Eine derartige Haltevorrichtung kann eine Kunststoff- und/oder Metallkonstruktion, insbesondere Duroplast, aufweisen.

Die Erfindung umfasst außerdem die Verwendung einer erfindungsgemäßen Verbundscheibe in einem Kraftfahrzeug, bevorzugt einem Personenkraftwagen, als Windschutzscheibe oder Seitenscheibe.

Es versteht sich, dass die vorstehend genannten und nachstehend näher erläuterten Merkmale nicht nur in den angegebenen Kombinationen und Konfigurationen, sondern auch in anderen Kombinationen und Konfigurationen oder in Alleinstellung einsetzbar sind, ohne den Rahmen der vorliegenden Erfindung zu verlassen.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine Darstellung einer Ausgestaltung einer erfindungsgemäßen Verbundscheibe mit einem Platzhalter vor der Lamination,
- Fig. 2: eine Draufsicht auf eine Ausgestaltung einer erfindungsgemäßen Verbundscheibe nach der Entfernung des Platzhalters,
- Fig. 3: eine Draufsicht auf eine weitere Ausgestaltung einer erfindungsgemäßen Verbundscheibe mit einem als Rahmen ausgebildeten Platzhalter,
- Fig. 4: eine Draufsicht auf eine Ausgestaltung des als Rahmen ausgebildeten Platzhalter mit einem Display,
- Fig. 5: eine Draufsicht auf eine Ausgestaltung einer erfindungsgemäßen Verbundscheibe als Windschutzscheibe,
- Fig. 6: eine Draufsicht auf eine weitere Ausgestaltung einer erfindungsgemäßen Verbundscheibe als Seitenscheibe,
- Fig. 7: ein Flussdiagramm eines Ausführungsbeispiels des erfindungsgemäßen Verfahrens zur Herstellung einer Verbundscheibe.

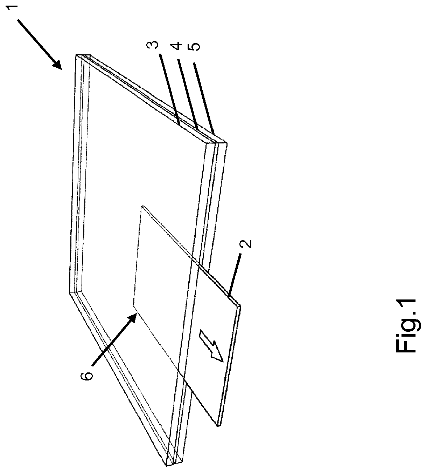

Fig. 1 zeigt eine Verbundscheibe 1 mit einem Platzhalter 2 vor der Lamination der Verbundscheibe 1. Die Verbundscheibe 1 besteht aus einer Außenscheibe 3 aus Kalk-Natron-Glas mit einer Dicke von 2,1 mm, einer Zwischenschicht 4 und einer Innenscheibe 5 aus Kalk-Natron-Glas mit einer Dicke von 2,1 mm.

Die Zwischenschicht 4 ist aus einer einzelnen Folie aus PVB ausgebildet und weist im Randbereich eine Ausnehmung 6 auf. Die Form der Ausnehmung 6 entspricht der Grundform eines elektrischen Verbrauchers, der nach der Lamination der Verbundscheibe 1 in die Ausnehmung 6 eingesetzt wird. Vor der Lamination ist in der Ausnehmung 6 der Platzhalter 2 angeordnet.

Der Platzhalter 2 ist im dargestellten Beispiel in Form eines Papierblattes ausgebildet. Seine Dicke entspricht der Dicke der Zwischenschicht 4, so dass er in die Zwischenschicht 4 eingebettet ist. Der Platzhalter 2 ist derart dimensioniert, dass er über die Kante der Innenscheibe 5 aus der Ausnehmung 6 hinausragt. Die Ausnehmung 6 ist der Form des Platzhalterabschnittes angepasst, der in die Verbundscheibe 1 hineinragt. Zusätzlich weist der Platzhalter 2 eine Beschichtung aus Polytetrafluorethylen auf. Der Platzhalter 2 ist also flächig zwischen der Innenscheibe 5 und der Außenscheibe 3 im Bereich der Zwischenschicht 4 eingeklemmt.

Diese Anordnung hat sich als sehr sinnvoll erwiesen, da die für die Verbindung der Innenscheibe 5 und Außenscheibe 3 dienende Zwischenschicht 4 den Platzhalter 2 sehr gut einschließt.

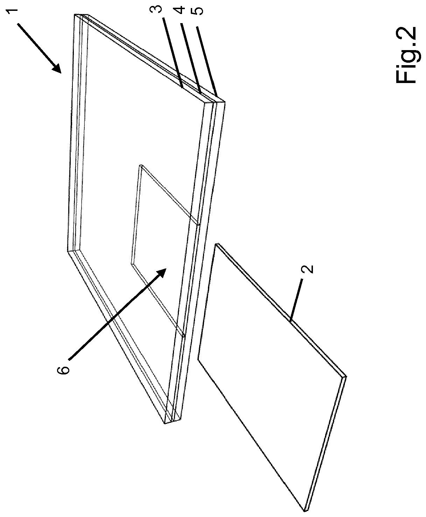

Figur 2 zeigt eine Draufsicht auf eine beispielhafte Ausgestaltung der Verbundscheibe 1 aus Figur 1 nach der Lamination. Die Lamination der Verbundscheibe 1 mit Platzhalter 2 wird in einer druck- und temperaturbeständigen Vorrichtung durchgeführt. Während der Lamination wird die verflüssigte Zwischenschicht 4 im Bereich des Platzhalters 2 begrenzt. Dadurch wird die Form der Ausnehmung 6 beibehalten. Nach der Lamination wird der Platzhalter 2 aus der Ausnehmung 6 entfernt.

Wenn die Verbundscheibe 1 mit einem elektrischen Verbraucher anstatt des Platzhalters 2 bei der Lamination erhöhten thermischen Beanspruchungen und Druck ausgesetzt wäre, könnte dies zur Verformung oder Zerstörung des elektrischen Verbrauchers führen. Die Verwendung des mit einer Antihaftschichtbeschichtung versehenen Platzhalters 2 hat sich als hervorragend herausgestellt, da sich der Platzhalter 2 auf einfache Art und Weise nach der Lamination von der Zwischenschicht 4 wieder löst und aus der Verbundscheibe 1 wieder entfernen lässt.

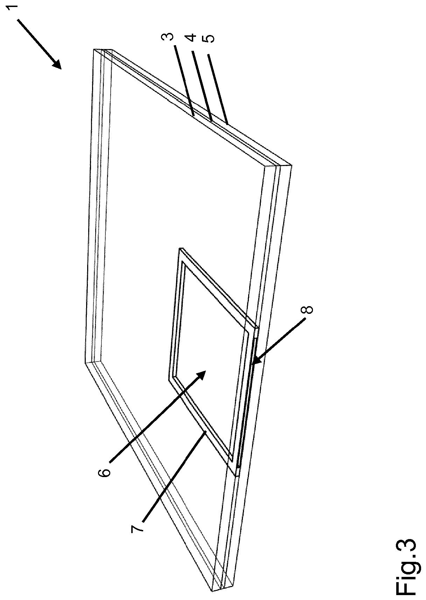

Figur 3 zeigt eine Draufsicht auf eine weitere Ausgestaltung einer erfindungsgemäßen Verbundscheibe 1. Im dargestellten Beispiel ist der Platzhalter 2 als eine Haltevorrichtung 7 ausgebildet, die zwischen der Innenscheibe 5 und der Außenscheibe 3 die Ausnehmung 6 umrahmt. Die rahmenförmig ausgebildete Haltervorrichtung 7 weist an einer Seite eine schlitzförmige Aufnahmeöffnung 8 auf, die zur Aufnahme eines Displays vorgesehen ist. Die rahmenförmige Haltevorrichtung 7 besteht aus einer Metall-/Kunststoffkonstruktion.

Während der Lamination begrenzt die rahmenfömige Haltevorrichtung 7 die Ausnehmung gegenüber der Zwischenschicht 4. Nach der Lamination verbleibt die rahmenförmige Haltevorrichtung 7 in der Verbundscheibe 1.

Ein OLED-Display wird über die schlitzförmige Aufnahmeöffnung 8 in die rahmenförmige Haltevorrichtung 7 eingesetzt. Die Haltevorrichtung 7 verfügt auch über mehrere Klemmen, die als mechanisch wirkende Mittel das Display fixieren. Bei Bedarf erlauben die Klemmen eine zerstörungsfreie Entnahme des Displays.

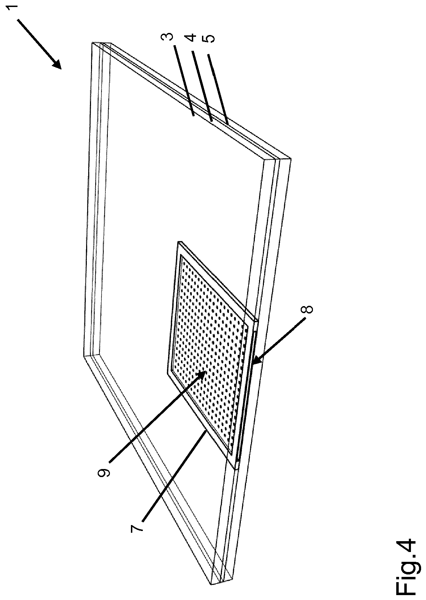

Figur 4 zeigt eine Draufsicht auf die rahmenförmige Haltevorrichtung 7 aus Figur 3. In der rahmenförmigen Haltervorrichtung 7 ist das Display 9 angeordnet.

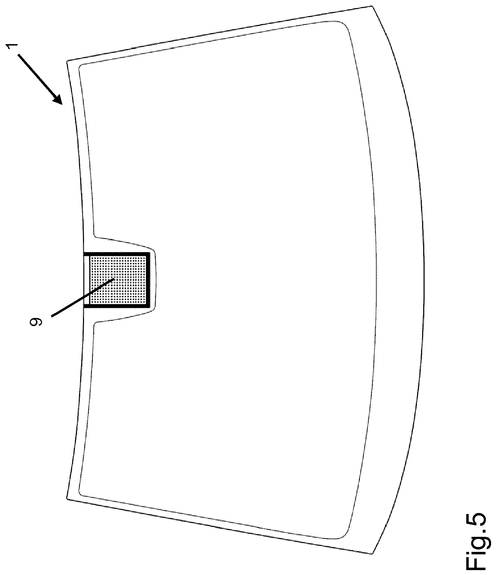

Figur 5 zeigt eine Draufsicht auf eine Ausgestaltung einer erfindungsgemäßen Verbundscheibe 1 als Windschutzscheibe eines Kraftfahrzeugs. Das Display 9 kann ein OLED-Display sein, das im mittleren, oberen Abschnitt der Verbundscheibe 1 angeordnet ist. Im dargestellten Beispiel ist das Display 9 eine Komponente eines Systems zur Wiedergabe von Bildinformationen, welches als Ersatz für eine fahrzeugseitige Rückspiegelanordnung vorgesehen ist. Ein Fahrzeugfahrer kann mittels des Displays 9 über eine Kameradarstellung den rückwärtigen Verkehrsraum einsehen.

Alternativ oder Zusätzlich kann ein derartiges Display 9 zur Darstellung von Zustandsinformationen einer Verkehrsampel dienen. Die Außenscheibe 3 hat vorzugsweise im Bereich nahe der Glaskante auf der Innenseite einen Schwarzdruck, um das Display 9 zu kaschieren.

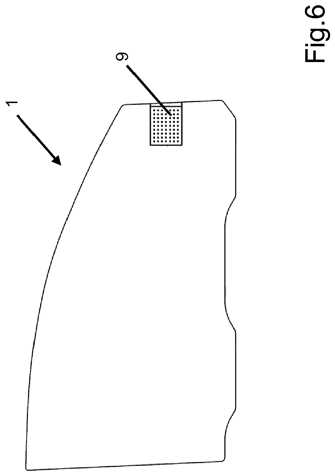

Figur 6 zeigt eine Draufsicht auf eine weitere Ausgestaltung einer erfindungsgemäßen Verbundscheibe 1 als Seitenscheibe eines Kraftfahrzeugs. Im dargestellten Beispiel ist das Display 9 in einer vorderen Seitenscheibe des Fahrzeugs eingebaut.

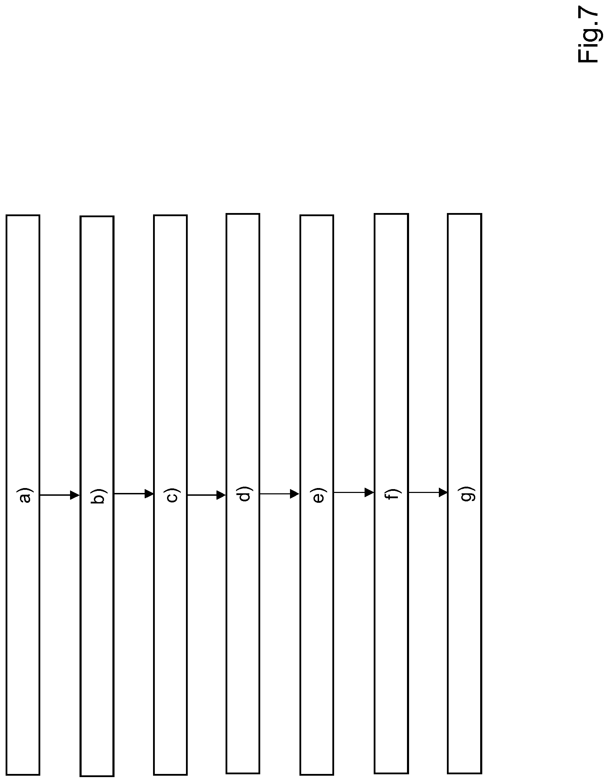

Figur 7 zeigt ein Flussdiagramm eines Ausführungsbeispiels des erfindungsgemäßen Verfahrens zur Herstellung einer Verbundscheibe 1 mit einem OLED-Display 9. Die Herstellung erfolgt im waagerechten Zustand, wobei
a) eine thermoplastische Zwischenschicht bereitgestellt wird,
b) eine Ausnehmung 6 im Randbereich der thermoplastischen Zwischenschicht 4 ausgeschnitten wird, wobei die Form der Ausnehmung der Grundform des OLED-Displays 9 entspricht,
c) die thermoplastische Zwischenschicht 4 flächig auf die Innenscheibe 5 aufliegt,
d) ein Platzhalter 2 in die Ausnehmung 6 eingesetzt wird,
e) auf die thermoplastische Zwischenschicht 4 die Außenscheibe 3 aufgelegt wird,
f) ein Schichtstapel umfassend
   - Innenscheibe 5,
   - thermoplastische Zwischenschicht 4 mit Platzhalter 2 und
   - Außenscheibe 3
   zu einer Verbundscheibe 1 laminiert wird und
g) das OLED-Display 9 in die Ausnehmung 6 eingesetzt wird.

Die Herstellung des Verbundglases durch Lamination erfolgt im Autoklavverfahren. Die Verbindung von Außenscheibe 3 und Innenscheibe 5 erfolgt dabei bei einem erhöhten Druck von etwa 10 bar bis 15 bar und Temperaturen von 130 °C bis 145 °C über etwa 2 Stunden.

Durch die Verwendung des Platzhalters 2 bei der Lamination kann in einfacher Weise die Form der Ausnehmung 6 beibehalten werden, die zur Aufnahme des OLED-Displays 9 vorgesehen ist. Da das OLED-Display 9 der Lamination nicht ausgesetzt wird, kann dieser durch hohe Temperaturen und Druck nicht beeinträchtigt werden.

Der Platzhalter 2 ist in diesem Beispiel als eine Platte ausgebildet, die flach und überall gleich dick ist. Nachdem der Platzhalter in Schritt e) in die Ausnehmung 6 eingesetzt wurde, kann er seitlich über die Kante der Innenscheibe 5 hinausragen. Dies ermöglicht die Bildung einer Grifffläche, an der der Platzhalter 2 nach der Lamination in Schritt f) aus der Verbundscheibe 1 entfernt werden kann. Vorteilhafterweise weist der Platzhalter in dieser Ausführungsform eine Antihaftbeschichtung auf, die das Ablösen des Platzhalters 2 von Zwischenschicht 4 ermöglicht.

Nach dem Einsetzen des OLEDs-Displays 9 in die Ausnehmung 6 wird die Öffnung der Ausnehmung 6 mit einem Dichtmittel gasdicht verschlossen. Das OLED-Display 9 weist ein Anschlusselement auf, das das OLED-Display 9 mit einer Stromversorgung und einem Datennetzwerk verbindet. Das Anschlusselement des OLED-Displays 9 ragt über das Dichtmittel außerhalb der Verbundscheibe 1 hinaus. Als Dichtmittel wird Bytol verwendet.

Alternativ kann die Ausnehmung 6 mit dem OLED-Display 9 mittels einer nachträglichen und zeitlich beschränkten Lamination bei geringen Temperaturen in der Verbundscheibe 1 mit verschlossen werden. Eine dabei verwendete PVB weist eine Dicke von 50 µm bis 0,38 mm auf.

Optional kann der Platzhalter 2 als eine Haltevorrichtung 7, wie in Figur 3 und 4 dargestellt, ausgebildet sein, die zwischen der Innenscheibe 5 und der Außenscheibe 3 die Ausnehmung 6 umrahmt. Dabei wird das OLED-Display 9 nach der Lamination in Schritt f) in die Haltevorrichtung 7 eingesetzt. In einer derartigen Ausführungsform ist die Haltevorrichtung 7 als ein Rahmen ausgebildet, der auf der Innenscheibe in Schritt d) des Herstellungsverfahrens angeordnet wird. Dadurch begrenzt der Rahmen die Ausnehmung 6 gegenüber der Zwischenschicht 4. Zusätzlich kann die Haltevorrichtung 7 über zwei Klemmen verfügen, die das OLED-Display 9 im Rahmen fixieren. Der Rahmen weist eine Aufnahmeöffnung 8 auf, über die das OLED-Display 6 in die Ausnehmung 6 eingesetzt wird.

### Bezugszeichenliste:

- 1: Verbundscheibe
- 2: Platzhalter
- 3: Außenscheibe
- 4: Zwischenschicht
- 5: Innenscheibe
- 6: Ausnehmung
- 7: Haltevorrichtung
- 8: Aufnahmeöffnung
- 9: Display

## Patentansprüche

1. Verbundscheibe (1) mit einem elektrischen Verbraucher (9), umfassend eine Außenscheibe (3) und eine Innenscheibe (5), die über eine thermoplastische Zwischenschicht (4) miteinander verbunden sind, wobei
• die thermoplastische Zwischenschicht (4) eine Ausnehmung (6) aufweist, die eine Aufnahmeöffnung (8) aufweist,
• die Aufnahmeöffnung (8) derart dimensioniert ist, dass diese zur Aufnahme des elektrischen Verbrauchers (9) in die Ausnehmung (6) vorgesehen ist und
• der elektrische Verbraucher (9) in der Ausnehmung (6) angeordnet ist
und wobei zwischen dem elektrischen Verbraucher (9) und der Zwischenschicht (4) keine Verbindung vorgesehen ist.

2. Verbundscheibe (1) nach Anspruch 1, **dadurch gekennzeichnet, dass** der elektrische Verbraucher (9) eine Anzeigevorrichtung, insbesondere ein Display, zur Anzeige einer optischen Information aufweist.

3. Verbundscheibe (1) nach Anspruch 1 oder 2, **dadurch gekennzeichnet, dass** die Ausnehmung (6) derart dimensioniert ist, dass diese den elektrischen Verbraucher (9) bündig aufnehmen kann.

4. Verbundscheibe (1) nach einem der Ansprüche 1 bis 3, **dadurch gekennzeichnet, dass** die Ausnehmung (6) eine Haltervorrichtung (7) aufweist, in der der elektrische Verbraucher (9) gelagert ist.

5. Verbundscheibe (1) nach einem der Ansprüche 1 bis 4, dass die Aufnahmeöffnung (8) schlitzförmig ausgebildet ist.

6. Verbundscheibe (1) nach einem der Ansprüche 1 bis 5, **dadurch gekennzeichnet, dass** sich ein Anschlusselement des elektrischen Verbrauchers (9) aus der Aufnahmeöffnung (8) nach außen erstreckt.

7. System zur Wiedergabe von Bildinformationen, **dadurch gekennzeichnet, dass** eine Kamera zur Aufnahme von Bildern der Umgebung eines Fahrzeugs vorgesehen ist und eine Verbundscheibe (1) nach einem der vorhergehenden Ansprüche mit einem Display (9) zur Anzeige der aufgenommen Bilder vorgesehen ist.

8. Verfahren zur Herstellung einer Verbundscheibe (1) nach einem der Ansprüche 1 bis 6 mit einem elektrischen Verbraucher (9), wobei
a) eine thermoplastische Zwischenschicht bereitgestellt wird,
b) eine Ausnehmung (6) im Randbereich der thermoplastischen Zwischenschicht (4) ausgeschnitten wird, wobei die Form der der Ausnehmung (6) der Grundform des elektrischen Verbrauchers (9) angepasst ist,
c) die thermoplastische Zwischenschicht (4) flächig auf einer Innenscheibe (5) oder Außenscheibe (3) aufliegt,
d) ein Platzhalter (2) in die Ausnehmung (6) eingesetzt wird,
e) auf die thermoplastische Zwischenschicht (4) die Außenscheibe (3) oder Innenscheibe (5) aufgelegt wird,
f) ein Schichtstapel umfassend
- Innenscheibe (5),
- thermoplastische Zwischenschicht (4) mit einem Platzhalter (2) und
- Außenscheibe (3)
zu einer Verbundscheibe (1) laminiert wird und
g) der elektrische Verbraucher (9) in die Ausnehmung (6) eingesetzt wird.

9. Verfahren nach Anspruch 8, **dadurch gekennzeichnet, dass** der Platzhalter (2) aus der Verbundscheibe (1) entfernt wird.

10. Verfahren nach Anspruch 8, **dadurch gekennzeichnet, dass** der Platzhalter (2) zumindest teilweise eine Antihaftbeschichtung, insbesondere Polytetrafluorethylen, aufweist.

11. Verfahren nach Anspruch 8, **dadurch gekennzeichnet, dass** der Platzhalter (2) als eine Haltevorrichtung (7) ausgebildet ist, die zwischen der Innenscheibe (5) und der Außenscheibe (3) die Ausnehmung (6) umrahmt und der elektrische Verbraucher (9) in der Haltevorrichtung (7) eingesetzt wird.

12. Verfahren nach Anspruch 11, **dadurch gekennzeichnet, dass** die Haltevorrichtung (7) eine Aufnahmeöffnung (8) aufweist.

13. Verfahren nach Anspruch 11, **dadurch gekennzeichnet, dass** die Haltevorrichtung (7) eine Kunststoff- und/oder Metallkonstruktion aufweist.

14. Verwendung einer Verbundscheibe (1) nach einem der Ansprüche 1 bis 6 in einem Kraftfahrzeug, bevorzugt einem Personenkraftwagen, als Windschutzscheibe oder Seitenscheibe.

## Claims

1. Composite pane (1) with an electrical load (9), comprising an outer pane (3) and an inner pane (5) that are joined to one another via a thermoplastic intermediate layer (4), wherein
• the thermoplastic intermediate layer (4) has a recess (6) that has a receiving opening (8),
• the receiving opening (8) is dimensioned such that it is designed for accommodating the electrical load (9) in the recess (6), and
• the electrical load (9) is arranged in the recess (6)
and wherein no connection is provided between the electrical load (9) and the intermediate layer (4).

2. Composite pane (1) according to claim 1, **characterized in that** the electrical load (9) has a display device, in particular a display, for displaying optical information.

3. Composite pane (1) according to claim 1 or 2, **characterized in that** the recess (6) is dimensioned such that it can accommodate the electrical load (9) in a flush manner.

4. Composite pane (1) according to one of claims 1 through 3, **characterized in that** the recess (6) has a holding device (7), in which the electrical load (9) is mounted.

5. Composite pane (1) according to one of claims 1 through 4, that the receiving opening (8) is slit-shaped.

6. Composite pane (1) according to one of claims 1 through 5, **characterized in that** a connection element of the electrical load (9) extends outward out of the receiving opening (8).

7. System for reproducing image data, **characterized in that** a camera is provided for recording images of the surroundings of a vehicle and a composite pane (1) according to one of the preceding claims is provided with a display (9) for displaying the recorded images.

8. Method for producing a composite pane (1) according to one of claims 1 through 6 with an electrical load (9), wherein
a) a thermoplastic intermediate layer is provided,
b) a recess (6) is cut out in the edge region of the thermoplastic intermediate layer (4), wherein the shape of the recess (6) is adapted to the basic shape of the electrical load (9),
c) the thermoplastic intermediate layer (4) lies flat on an inner pane (5) or an outer pane (3),
d) a placeholder (2) is inserted into the recess (6),
e) the outer pane (3) or the inner pane (5) is placed on the thermoplastic intermediate layer (4),
f) a layer stack comprising
- inner pane (5),
- thermoplastic intermediate layer (4) with a placeholder (2), and
- outer pane (3)
is laminated to form a composite pane (1), and
g) the electrical load (9) is inserted into the recess (6).

9. Method according to claim 8, **characterized in that** the placeholder (2) is removed from the composite pane (1).

10. Method according to claim 8, **characterized in that** the placeholder (2) has, at least partially, a non-adhesive coating, in particular polytetrafluoroethylene.

11. Method according to claim 8, **characterized in that** the placeholder (2) is implemented as a holding device (7) that frames the recess (6) between the inner pane (5) and the outer pane (3) and the electrical load (9) is inserted in the holding device (7).

12. Method according to claim 11, **characterized in that** the holding device (7) has a receiving opening (8).

13. Method according to claim 11, **characterized in that** the holding device (7) has a plastic and/or metal construction.

14. Use of a composite pane (1) according to one of claims 1 through 6 in a motor vehicle, preferably a passenger car, as a windshield or side window.

## Revendications

1. Vitrage feuilleté (1) comportant un consommateur électrique (9), comprenant une vitre externe (3) et une vitre interne (5) qui sont reliées entre elles par l'intermédiaire d'une couche intermédiaire (4) thermoplastique, dans lequel
· la couche intermédiaire (4) thermoplastique présente un évidement (6) qui présente une ouverture de réception (8),
· l'ouverture de réception (8) est dimensionnée de telle sorte que celle-ci est prévue pour la réception du consommateur électrique (9) dans l'évidement (6) et
· le consommateur électrique (9) est disposé dans l'évidement (6)
et dans lequel aucune liaison n'est prévue entre le consommateur électrique (9) et la couche intermédiaire (4).

2. Vitrage feuilleté (1) selon la revendication 1, **caractérisé en ce que** le consommateur électrique (9) présente un dispositif d'affichage, en particulier un écran, pour l'affichage d'informations optiques.

3. Vitrage feuilleté (1) selon la revendication 1 ou 2, **caractérisé en ce que** l'évidement (6) est dimensionné de telle sorte que celui-ci peut recevoir le consommateur électrique (9) en affleurement.

4. Vitrage feuilleté (1) selon l'une des revendications 1 à 3,
**caractérisé en ce que** l'évidement (6) présente un dispositif formant élément de maintien (7) dans lequel est logé le consommateur électrique (9).

5. Vitrage feuilleté (1) selon l'une des revendications 1 à 4, **en ce que** l'ouverture de réception (8) est réalisée en forme de fente.

6. Vitrage feuilleté (1) selon l'une des revendications 1 à 5,
**caractérisé en ce qu'**un élément de raccordement du consommateur électrique (9) s'étend vers l'extérieur à partir de l'ouverture de réception (8).

7. Système permettant la reproduction d'informations d'image,
**caractérisé en ce qu'**une caméra est prévue pour la prise d'images de l'environnement d'un véhicule et un vitrage feuilleté (1) selon l'une des revendications précédentes comportant un écran (9) est prévu pour l'affichage des images prises.

8. Procédé de fabrication d'un vitrage feuilleté (1) selon l'une des revendications 1 à 6 comportant un consommateur électrique (9), dans lequel
a) une couche intermédiaire thermoplastique est fournie,
b) un évidement (6) est découpé dans la zone de bord de la couche intermédiaire (4) thermoplastique, dans lequel la forme de de l'évidement (6) est adaptée à la forme de base du consommateur électrique (9),
c) la couche intermédiaire (4) thermoplastique repose à plat sur une vitre interne (5) ou une vitre externe (3),
d) un élément de maintien d'espacement (2) est inséré dans l'évidement (6),
e) la vitre externe (3) ou la vitre interne (5) est appliquée sur la couche intermédiaire (4) thermoplastique,
f) un empilement de couches comprenant
- une vitre interne (5),
- une couche intermédiaire (4) thermoplastique comportant un élément de maintien d'espacement (2) et
- une vitre externe (3)
est stratifié en un vitrage feuilleté (1) et
g) le consommateur électrique (9) est inséré dans l'évidement (6).

9. Procédé selon la revendication 8, **caractérisé en ce que** l'élément de maintien d'espacement (2) est retiré du vitrage feuilleté (1).

10. Procédé selon la revendication 8, **caractérisé en ce que** l'élément de maintien d'espacement (2) présente au moins partiellement un revêtement antiadhésif, en particulier du polytétrafluoroéthylène.

11. Procédé selon la revendication 8, **caractérisé en ce que** l'élément de maintien d'espacement (2) est réalisé en tant que dispositif de maintien (7) qui encadre l'évidement (6) entre la vitre interne (5) et la vitre externe (3) et le consommateur électrique (9) est inséré dans le dispositif de maintien (7).

12. Procédé selon la revendication 11, **caractérisé en ce que** le dispositif de maintien (7) présente une ouverture de réception (8).

13. Procédé selon la revendication 11, **caractérisé en ce que** le dispositif de maintien (7) présente une construction en plastique et/ou en métal.

14. Utilisation d'un vitrage feuilleté (1) selon l'une des revendications 1 à 6 dans un véhicule automobile, de préférence une voiture particulière, en tant que pare-brise ou vitre latérale.
